# EUROPÄISCHE PATENTSCHRIFT

(11) **EP 2 303 521 B1**
(45) Veröffentlichungstag und Bekanntmachung des Hinweises auf die Patenterteilung: **04.01.2012**
(21) Anmeldenummer: 09744944.1
(22) Anmeldetag: 05.10.2009
(51) Int. Cl.: B25J 9/16

(54) **INDUSTRIEROBOTER UND BAHNPLANUNGSVERFAHREN ZUM STEUERN DER BEWEGUNG EINES INDUSTRIEROBOTERS**
INDUSTRIAL ROBOT AND PATH PLANNING METHOD FOR CONTROLLING THE MOVEMENT OF AN INDUSTRIAL ROBOT
ROBOT INDUSTRIEL ET PROCÉDÉ DE PLANIFICATION DE TRAJECTOIRE POUR COMMANDER LE DÉPLACEMENT D UN ROBOT INDUSTRIEL

(30) Priorität: 06.10.2008 DE 102008042612
(43) Veröffentlichungstag der Anmeldung: 06.04.2011
(73) Patentinhaber: KUKA Roboter GmbH, 86165 Augsburg (DE)
(72) Erfinder: SONNER, Christian, 80339 München (DE); WEISS, Martin, 86459 Margertshausen (DE); ZIMMERMANN, Uwe, 86152 Augsburg (DE)
(74) Vertreter: Patentanwälte Funk & Böss GbR
(86) Internationale Anmeldenummer: PCT/EP2009/007114
(87) Internationale Veröffentlichungsnummer: WO 2010/040493

(56) Entgegenhaltungen:
- EP-A- 1 424 613
- EP-A- 1 849 553
- DE-A1- 10 161 470
- DE-A1- 10 344 526

## Beschreibung

Die Erfindung betrifft Industrieroboter und Bahnplanungsverfahren zum Steuern der Bewegung eines Industrieroboters.

Industrieroboter im Allgemeinen sind Handhabungsmaschinen, die zur selbsttätigen Handhabung von Objekten mit zweckdienlichen Werkzeugen ausgerüstet und bezüglich mehrerer Bewegungsachsen, insbesondere hinsichtlich Orientierung, Position und Arbeitsablauf programmierbar sind. Industrieroboter umfassen im Allgemeinen einen Roboterarm, eine Steuerungsvorrichtung und gegebenenfalls einen Effektor, der zum Beispiel als ein Greifer zum Greifen eines Werkzeugs ausgebildet sein kann und am Roboterarm befestigt ist. Der Roboterarm stellt im Wesentlichen den beweglichen Teil des Industrieroboters dar und weist mehrere Achsen auf, die zum Beispiel mittels elektrischer Antriebe von der Steuerungsvorrichtung für die Bewegung des Industrieroboters angesteuert werden, damit beispielsweise der Tool Center Point des Industrieroboters auf einer vorbestimmten Bahn bewegt wird.

Damit der Industrieroboter den Tool Center Point auf der vorbestimmten Bahn bewegt, umfasst dessen Steuerungsvorrichtung ein geeignetes Rechenprogramm. Konventionell werden für die Steuerung des Industrieroboters alle Freiheitsgrade explizit angegeben, entweder durch die Definition aller Achswerte bzw. Achsstellungen des Industrieroboters oder durch die Definition kartesischer Tool Center Point (TCP)-Werte (x, y, z, a, b, c) plus eventuell zusätzlicher Achswerte, so dass eindeutig auf die Roboterposition geschlossen werden kann.

Die eindeutigen Positionen werden beispielsweise direkt vor Ort durch Teachen des Industrieroboters oder indirekt über eine Offline-Prgrammierung bestimmt. Bei Letzterer kann die eindeutige vollständige Position auch aus der Aufgabenbeschreibung berechnet werden, die nur die benötigten Freiheitsgrade vorgibt, und die restlichen Freiheitsgrade z.B. anhand von Optimalitätskriterien festlegt.

Normalerweise möchte man keine große Menge von Punkten auf diese Weise definieren, sondern wie z.B. in zahlreichen existierenden Anwendungen nur den Anfangs- und Endpunkt einer Bahn. Die Bewegung auf dieser Bahn wird dann von der Steuerungsvorrichtung des Industrieroboters geplant, interpoliert und abgefahren.

Im Fall von redundanten Prozessen erfolgt diese Planung bzw. Interpolation auf Basis der definierten Achsstellungen bzw. kartesischen Koordinaten (z.B. "Linear" oder "Spline"). Dadurch ergibt sich jedoch eine spezifische Bahn zwischen Start- und Endpunkt, welche normalerweise die sich ergebene Redundanz nur unzulänglich ausnutzt oder gar ein völlig anderes Verhalten aufweist, als der Nutzer erwartet bzw. der Prozess benötigt.

Beispielsweise beim Remote-Laserschweißen mit Zoomoptik, das mittels eines Industrieroboters mit sechs Freiheitsgraden durchgeführt wird, erhält man ein 7-Achssystem, aufweisend die sechs Achsen des Industrieroboters und eine 7. Achse, die durch die Zoomoptik z.B. in Form einer Linearachse für die Laserschweißvorrichtung am Flansch des Industrieroboters gebildet wird. Bei einer konventionellen Vorgehensweise werden die Anfangs- und Endpositionen mit Hilfe der kartesischen Bahn *b(x, y, z, a, b, c)* plus Fokusabstand *f* definiert. Bei konventionellen Anwendungen werden nun der Fokusabstand sowie die Bahn interpolieren. die Bahn interpolieren.

Die EP 1 424 613 A1 offenbart ein Bahnplanungsverfahren zum Steuern der Bewegung eines Industrieroboters, an dessen Roboterarm eine Remote -Laserschweißvorrichtung als Effektor befestigt ist, der vorgesehen ist, Prozesspunkte in einem veränderbaren Abstand zu einem ersten ausgezeichneten Punkt des Industrieroboters zu bearbeiten. Eine "Bearbeitungsbahn B", eine "Bewegungsbahn B' " des Roboters, und eine "geteachte" Bewegungsbahn des Roboters werden offenbart. Die Bearbeitungsbahn und die geteachte Bewegungsbahn sind vorgegeben. Für der Fall, dass die Bearbeitungsbahn identisch mit einer "Laserbahn" ("Einwirkungsbahn") ist, wird eine Differenz zwischen der Bearbeitungsbahn und der geteachten Bewegungsbahn bestimmt, und die geteachte Bewegungsbahn, als auch die Werkzeugfreiheitsgraden (Spiegelstellungen und Laserfokus), werden entsprechend angepaßt.

Die DE 103 44 526 A1 offenbart ein Verfahren zum Remote-Laserschweißen von Bauteilen mit einem Laserkopf, der von ei-nem Industrieroboter mit einer mehrere Handachsen aufweisenden Roboterhand geführt wird. Während des Schweißens wird der von dem Laserkopf ausgehende Laserstrahl entlang einer zu verfolgenden Schweißbahn durch Orientierungsänderungen und mit veränderlichem Einstrahlwinkel geführt. Die Orientierungsänderung wird nur durch Schwenkbewegungen der Roboterhand um mindestens eine ihrer Handachsen erzeugt.

Um das gewünschte Verhalten mit einer konventionellen Steuerung auch nur annähernd zu erhalten, muss mit der konventionellen Steuerung eine Mehrzahl von Zwischenpunkten mit relativ kleinen Abständen definiert werden, zwischen denen die Steuerung dann z.B. überschliffene Verbindungen fährt. Der Anwender muss also eine Art Interpolation selbst nachbilden, was aber z.B. beim Umteachen dieser Bahn aufgrund der vielen Punkte relativ aufwändig ist.

Somit ergeben sich Roboteranwendungen, bei denen mehr kinematische Freiheitsgrade zur Verfügung stehen, als die den Roboteranwendungen zugeordneten Prozesse erfordern. Sei es beispielsweise, dass mit einem 6-Achs Industrieroboter ein Prozess mit weniger als sechs Freiheitsgraden, z.B. bei rotationssymmetrischen Werkzeugen oder Laserschweißen, bearbeitet wird oder Industrieroboter mit mehr als sechs Achsen verwendet oder Werkstücke mit Kinematiken, z.B. Dreh-Kipptisch oder kooperierende Roboter, geführt werden.

Die Aufgabe der Erfindung ist es daher, ein verbessertes Bahnplanungsverfahren zum Steuern der Bewegung eines Industrieroboters für redundante Prozesse und/oder mit redundanten Kinematiken anzugeben.

Die Aufgabe der Erfindung wird gelöst durch ein Bahnplanungsverfahren zum Steuern der Bewegung eines Industrieroboters, an dessen Roboterarm ein Effektor, insbesondere eine Remote-Laserschweißvorrichtung befestigt ist, der vorgesehen ist, Prozesspunkte in einem veränderbaren Abstand zu einem ersten ausgezeichneten Punkt des Industrieroboters zu bearbeiten, aufweisend folgende Verfahrensschritte:
- Erzeugen von ersten transformierten programmierten Punkten aus programmierten Punkten, die jeweils die Stellungen von Achsen des Industrieroboters beschreiben oder in Koordinaten ausgedrückt sind, die die Lagen des dem Industrieroboter zugeordneten ersten ausgezeichneten Punktes beschreiben, wobei die ersten transformierten programmierten Punkte in Koordinaten ausgedrückt.sind, die die entsprechenden Positionen eines dem Industrieroboter zugeordneten zweiten ausgezeichneten Punktes angeben,
- Erzeugen von zweiten transformierten programmierten Punkten aus den programmierten Punkten und den zugehörigen Abständen, wobei die zweiten transformierten programmierten Punkte in den jeweiligen Positionen beschreibenden Koordinaten ausgedrückt sind,
- aufgrund der ersten transformierten programmierten Punkte, Planen einer ersten Bahn, auf der sich der zweite ausgezeichnete Punkt bewegen soll,
- Planen einer zweiten Bahn aufgrund der zweiten transformierten programmierten Punkte unabhängig vom Planen der ersten Bahn,
- Festlegen eines einen Freiheitsgrad des Industrieroboters mit befestigtem Effektor beschreibenden Parameters für jeden programmierten Punkt, und
- unter Berücksichtigung des relevanten Parameters Bewegen der Achsen des Industrieroboters derart, so dass sich der zweite ausgezeichnete Punkt auf der ersten geplanten Bahn bewegt und Einstellen des Effektors derart, dass sich die Prozesspunkte auf der zweiten geplanten Bahn bewegen.

Die Aufgabe der Erfindung wird auch gelöst durch ein Bahnplanungsverfahren zum Steuern der Bewegung eines Industrieroboters, an dessen Roboterarm ein Effektor, insbesondere eine Remote-Laserschweißvorrichtung befestigt ist, der vorgesehen ist, Prozesspunkte in einem veränderbaren Abstand zu einem ersten ausgezeichneten Punkt des Industrieroboters zu bearbeiten, aufweisend folgende Verfahrensschritte:
- Erzeugen von transformierten programmierten Punkten aus programmierten Punkten, die jeweils in Koordinaten ausgedrückt sind, die die Positionen der Prozesspunkte beschreiben, und den zugehörigen Abständen mit Ausrichtung zum ersten ausgezeichneten Punkt, wobei die transformierten programmierten Punkte in Koordinaten ausgedrückt sind, die die entsprechenden Positionen eines dem Industrieroboter zugeordneten zweiten ausgezeichneten Punktes angeben,
- aufgrund der transformierten programmierten Punkte, Planen einer ersten Bahn, auf der sich der zweite ausgezeichnete Punkt bewegen soll,
- unabhängig vom Planen der ersten Bahn und aufgrund der programmierten Punkte, Planen einer zweiten Bahn auf der sich die Prozesspunkte bewegen sollen,
- Festlegen eines einen Freiheitsgrad des Industrieroboters mit befestigtem Effektor beschreibenden Parameters für jeden programmierten Punkt, und
- unter Berücksichtigung des relevanten Parameters Bewegen der Achsen des Industrieroboters derart, so dass sich der zweite ausgezeichnete Punkt auf der ersten geplanten Bahn bewegt und Einstellen des Effektors derart, dass sich die Prozesspunkte auf der zweiten geplanten Bahn bewegen.

Ein weiterer Aspekt der Erfindung betrifft einen Industrieroboter, aufweisend
- einen Roboterarm mit mehreren Achsen, dem ein erster ausgezeichneter Punkt zugeordnet ist,
- einen am Roboterarm befestigten Effektor, insbesondere eine am Roboterarm befestigte Remote-Laserschweißvorrichtung, der vorgesehen ist, Prozesspunkte in einem veränderbaren Abstand zum ersten ausgezeichneten Punkt zu bearbeiten, und
- eine Steuerungsvorrichtung, die eingerichtet ist,
   - die mehreren Achsen zu bewegen,
   - erste transformierte programmierte Punkte aus programmierten Punkten zu erzeugen, die jeweils die Stellungen der Achsen beschreiben oder in Koordinaten ausgedrückt sind, die die Lagen des ersten ausgezeichneten Punktes beschreiben, wobei die ersten transformierten programmierten Punkte in Koordinaten ausgedrückt sind, die die entsprechenden Positionen eines dem Industrieroboter zugeordneten zweiten ausgezeichneten Punktes angeben,
   - eine erste Bahn aufgrund der ersten transformierten programmierten Punkten zu planen, auf der sich der zweite ausgezeichnete Punkt bewegen soll,
   - zweite transformierte programmierte Punkte aus den programmierten Punkten und den zugehörigen Abständen zu erzeugen, wobei die zweiten transformierten programmierten Punkte in die jeweiligen Positionen beschreibenden Koordinaten ausgedrückt sind,
- eine zweite Bahn aufgrund der zweiten transformierten Punkte unabhängig vom Planen der ersten Bahn zu planen, und
- unter Berücksichtigung eines einen Freiheitsgrad des Industrieroboters mit befestigtem Effektor beschreibenden Parameter für jeden programmierten Punkt die Achsen des Industrieroboters derart zu bewegen, so dass sich der zweite ausgezeichnete Punkt auf der ersten geplanten Bahn bewegt und den Effektor derart einzustellen, dass sich die Prozesspunkte auf der zweiten geplanten Bahn bewegen.

Alternativ kann die eine Steuerungsvorrichtung eingerichtet sein,
- die mehreren Achsen zu bewegen,
- transformierten programmierte Punkte aus programmierten Punkten zu erzeugen, die jeweils in Koordinaten ausgedrückt sind, die die Positionen der Prozesspunkte beschreiben, und den zugehörigen Abständen mit Ausrichtung zum ersten ausgezeichneten Punkt, wobei die transformierten programmierten Punkte in Koordinaten ausgedrückt sind, die die entsprechenden Positionen eines dem Industrieroboter zugeordneten zweiten ausgezeichneten Punktes angeben,
- aufgrund der transformierten programmierten Punkte, eine erste Bahn zu planen, auf der sich der zweite ausgezeichnete Punkt bewegen soll,
- unabhängig vom Planen der ersten Bahn und aufgrund der programmierten Punkte eine zweite Bahn zu planen, auf der sich die Prozesspunkte bewegen sollen,
- einen Freiheitsgrad des Industrieroboters mit befestigtem Effektor beschreibenden Parameters für jeden programmierten Punkt festzulegen,
- unter Berücksichtigung eines einen Freiheitsgrad des Industrieroboters mit befestigtem Effektor beschreibenden Parameter für jeden programmierten Punkt die Achsen des Industrieroboters derart zu bewegen, so dass sich der zweite ausgezeichnete Punkt auf der ersten geplanten Bahn bewegt und den Effektor derart einzustellen, dass sich die Prozesspunkte auf der zweiten geplanten Bahn bewegen.

Am erfindungsgemäßen Industrieroboter ist der Effektor befestigt, der insbesondere als die Remote-Laserschweisvorrichtung ausgeführt ist, die einen Laserstrahl aussendet. Um den Abstand zwischen dem ersten ausgezeichnet Punkt und dem Prozesspunkt zu verändern bzw. einzustellen, kann z.B. der Fokus der Remote-Laserstrahlvorrichutung insbesondere mittels der Steuerungsvorrichtung einstellbar sein. Es ist aber auch möglich, dass die Position der Remote-Laserstrahlvorrichtung mittels einer insbesondere mit der Steuerungsvorrichtung verbundenen Linearachse, die nicht Bestandteil des Roboterarms ist, veränderbar ist. Dadurch weist der erfindungsgemäße Industrieroboter mit an ihm befestigtem Effektor wenigstens einen Freiheitsgrad mehr auf als der Industrieroboter ohne Effektor. Umfasst der Industrieroboter z.B. sechs Freiheitsgrade, dann weist der Industrieroboter mit Effektor wenigstens sieben Freiheitsgrade auf.

Die Remote-Laserschweißvorrichtung kann auch derart eingerichtet sein, dass nicht nur die Fokuslänge ihres Laserstrahls veränderbar ist, sondern auch dessen Orientierung, d.h. die Orientierung des von der Remote-Laserstrahlvorrichtung ausgehender Laserstrahl kann ohne Bewegen der Achsen des Industrieroboters verändert werden. Dann können auch mehrere Freiheitsgrade des Industrieroboters mit befestigtem Effektor beschreibende Parameter für jeden programmierten Punkt festgelegt werden.

Aufgrund des erfindungsgemäßen Verfahrens ist es möglich, redundante Prozesse/Kinematiken aufgabenspezifisch durchzuführen. Erfindungsgemäß werden aus den programmierten Punkten, d.h. definierten Freiheitsgrade, ausgedrückt z.B. in kartesischen Koordinaten, die z.B. die Lage, d.h. die Position und Orientierung des ersten ausgezeichneten Punktes, und/oder achsspezifisch, oder ein Subset dieser Freiheitsgrade durch eine entsprechende Transformation in alternative Freiheitsgrade umgewandelt. Diese alternativen Freiheitsgrade, d.h. die transformierten programmierten Punkte bilden nun die Grundlage für die Bahnplanung bzw. Interpolation.

Aufgrund des erfindungsgemäßen Verfahrens ist es möglich, die Bewegung des erfindungsgemäßen Industrieroboters durch gezieltes Ausnutzen der Redundanz Taktzeit zu optimieren oder die Bewegung des erfindungsgemäßen Industrieroboters durch gezieltes Ausnutzen der Redundanz so zu gestaltet, dass das dynamische Verhalten beispielsweise bezüglich Schwingungen verbessert oder gar optimiert wird und somit ein mittels des Industrieroboters durchgeführter Prozess besser abgearbeitet wird. Eine Geschwindigkeitsplanung kann auch auf den alternativen Freiheitsgraden, d.h. auf den ersten programmierten transformierten Punkten erfolgen und Offline-Tools können verbesserte, wenn nicht gar optimale Bewegungen erzeugen, die bisher nicht möglich waren oder nur durch die Ausgabe sehr eng gesetzter Stützpunkte in großer Anzahl realisiert werden können.

Es können die Start- und Endpunkte in den alternativen Freiheitsgraden angegeben werden und es können einem den erfindungsgemäßen Industrieroboter programmierenden Programmierer intuitivere Programmiermöglichkeiten angeboten werden.

Der Roboterarm umfasst die mehreren Achsen. Der Roboterarm kann insbesondere eine Roboterhand aufweisen, der drei Achsen zugeordnet sind, die sich in einem Handwurzelpunkt schneiden, und der zweite ausgezeichnet Punkt der Handwurzelpunkt ist. Somit wird für die Bahnplanung u.A. die Bewegung des Handwurzelpunktes geplant, wodurch es z.B. möglich ist, dass die Position des Handwurzelpunktes des erfindungsgemäßen Industrieroboters sich relativ wenig bewegt, um z.B. das Schwingungsverhalten des erfindungsgemäßen Industrieroboters zu verbessern.

Beim ersten ausgezeichneten Punkt kann es sich um den Tool Center Point des Industrieroboters handeln. Die programmierten Punkte, auf Basis derer die ersten transformierten Punkte erzeugt werden, entsprechen demnach der Lage (Pose) des Tool Center Points und können aufgrund konventioneller Techniken, z.B. durch Teachen oder einer off-line Programmierung erzeugt werden.

Bei einer konventionellen Bahnplanung wird aus den programmierten/geteachten Punkten eine geometrische Kontur im kartesischen Raum oder im Achsraum geplant. Die programmierten Punkte sind entweder kartesisch durch
- den Positionsanteil des Tool Center Points, z.B. ausgedrückt in den kartesischen Koordinaten X, Y, Z,
- die Orientierung des Tool Center Points, z.B. ausgedrückt in Euler-Winkeln, R, P, Y-Winkeln oder Quaternionen,
- Zusatzachsen,
- Zusatzinformation zur eindeutigen Auflösung der Rückwärtsrechnung bestimmt oder
achsspezifisch durch Achswinkel oder -längen, gegebenenfalls mit unterschiedlicher Behandlung von Achsen des Industrieroboters und externen bzw. Zusatzachsen.

Kartesische und achsspezifische Koordinaten stellen zwei verschiedene Lagerepräsentationen dar, die durch Vor- und Rückwärtsrechnung ineinander umgerechnet werden können. Kartesische Koordinaten sind i.A. für den Menschen "natürlich", achsspezifische Koordinaten dagegen für den Industrieroboter.

Wenn für den Prozess nur einige dieser Koordinaten relevant sind (z.B. beim Laserschweißen nur XYZ des Laserauftreffpunktes, die Orientierung kann innerhalb gewisser Grenzen um eine Vorzugsrichtung frei gewählt werden), dann werden gemäß dem erfindungsgemäßen Verfahren die geometrische Bahn für die restlichen Freiheitsgrade nicht in der durch die üblichen, jetzt noch freien Koordinaten Orientierung und Zusatzachsen geplant, sondern es wird ein alternatives Koordinatensystem / alternative Freiheitsgrade, d.h. die transformierten programmierten Punkte gewählt, in dem weitere für den Prozess oder die Anschauung des Programmierers wünschenswerte Eigenschaften einfacher ausgedrückt werden können.

Ein Anwendungsgebiet des erfindungsgemäßen Verfahrens ist das Laserschweißen. Beim Laserschweißen mit variablem Fokusabstand ist es aus Gründen der Taktzeit und der Schwingungsvermeidung wünschenswert, dass sich die Grundachsen des erfindungsgemäßen Industrieroboters, die in der Regel die größten Massen bewegen müssen, möglichst mit gleichmäßiger Geschwindigkeit und im Verhältnis zu den meist schnelleren Handachsen langsam bewegt werden.

Dies kann gemäß beispielsweise erreicht werden, indem zur Repräsentation der transformierten programmierten Punkte
a) die Prozesspunktkoordinaten im Raum (X, Y, Z),
b) die Position des Handwurzelpunktes, allgemein des zweiten ausgezeichneten Punktes, im Raum (X, Y, Z) und
c) der Parameter, dem ein Kreis zugeordnet sein kann, wobei die Position des ersten ausgezeichneten Punkts z.B. als Winkel auf dem Kreis dargestellt ist, genutzt werden.

Die Bahnen a), b) und c) werden separat geplant und zum Interpolationszeitpunkt in eine eindeutige Achsstellung des erfindungsgemäßen Industrieroboters inklusive Fokusabstand umgerechnet.

Bei kooperierenden Robotern kann zur Vermeidung von Schwingungen die Bewegung entsprechend geeigneter Vorgaben aufgeteilt werden. Eine Möglichkeit besteht darin, etwa den Handwurzelpunkt des Bauteil führenden Roboters separat zu interpolieren. Der Handwurzelpunkt ist hier beispielsweise genannt und kann durch andere eventuell besser geeignete Punkte (Bauteilschwerpunkt etc.) ersetzt werden.

Bei einer Transportbewegung, z.B. wenn der erfindungsgemäße Industrieroboter zum Palletieren verwendet wird, kann eine spezielle Orientierungsführung mit zugehörigem Beschleunigungsprofil verwendet werden, so dass eine Kraft während der Bewegung möglichst in Richtung einer ausgezeichneten Achse im Toolkoordinatensystem verläuft. Beim Palletieren speziell mit Sauggreifern führen zu große Scher- oder Beschleunigungskräfte zum Abreißen der Ladung. Durch eine geänderte Orientierungsführung können diese minimiert werden.

Ausführungsbeispiele der Erfindung sind exemplarisch in den beigefügten schematischen Zeichnungen dargestellt. Es zeigen:
- Fig. 1: einen Industrieroboter,
- Fig. 2: eine geometrische Beziehung des Handwurzelpunktes, des Tool Center Points und einer Prozessbahn des Industrieroboters veranschaulichendes Diagramm,
- Fig. 3: ein Flussdiagramm zur Veranschaulichung einer Interpolation für die Steuerung des Industrieroboters und
- Fig. 4: ein Diagramm zum Veranschaulichen vom Industrieroboter abgefahrenen Bahn aufgrund der Steuerung.

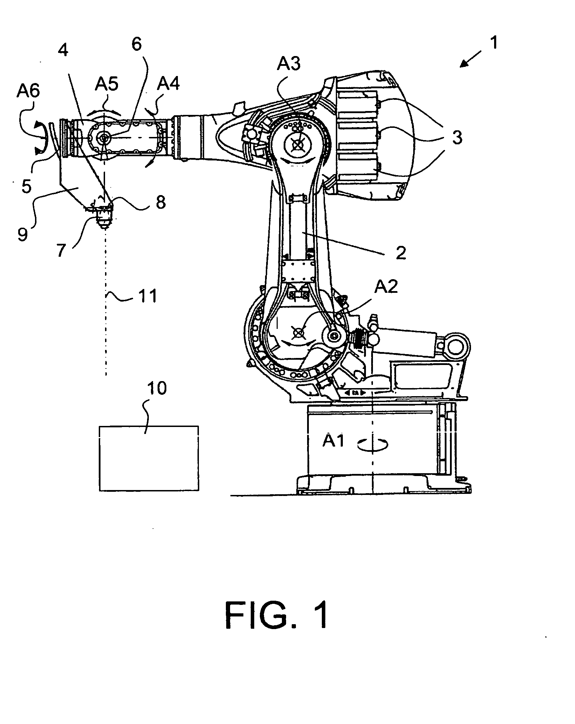

Die Fig. 1 zeigt einen Industrieroboter 1 mit einer Kinematik für Bewegungen in sechs Freiheitsgraden. Der Industrieroboter 1 weist in allgemein bekannter Weise einen Roboterarm 2 mit Gelenken, Hebeln, sechs Achsen A1 bis A6 und einer Roboterhand 4 auf, an deren Ende ein Flansch 5 angeordnet ist. Die Roboterhand 4, der die Achsen A4 bis A6 zugeordnet sind, ist im Falle des vorliegenden Ausführungsbeispiels derart ausgeführt, dass sich ihre Achsen A4-A6 in einem gemeinsamen Kreuzungspunkt, der normalerweise als Handwurzelpunkt 6 bezeichnet wird, schneiden.

Im Falle des vorliegenden Ausführungsbeispiels ist am Flansch 5 eine Remote-Laserschweißvorrichtung 9 befestigt, die einen allgemein bekannten Remote-Laserschweißkopf 7 aufweist. Der Remote-Laserschweißkopf 7 umfasst eine Fokussieroptik 8, von der ein Laserstrahl 11 ausgeht, mittels dem ein nicht dargestelltes Werkstück im Prinzip für den Fachmann in bekannter Weise z.B. mit einer Schweißnaht versehen werden kann.

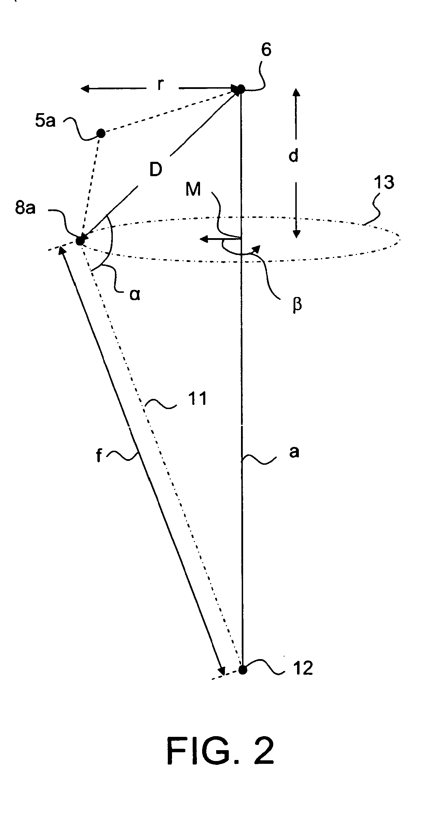

Des Weiteren wird jede der Bewegungsachsen A1 bis A6 von einem Antrieb bewegt, die beispielsweise jeweils einen elektrischen Motor 3 und Getriebe aufweisen, wie es dem Fachmann allgemein bekannt ist. Der Industrieroboter 1 weist ferner eine Steuerungsvorrichtung, im Falle des vorliegenden Ausführungsbeispiels einen Steuerrechner 10 auf, der mit den Antrieben des Industrieroboters 1 in nicht dargestellter Weise verbunden ist und diese mittels eines auf dem Steuerrechner 10 laufenden Rechenprogramms steuert, so dass der in der Fig. 2 gezeigte Tool Center Point 8a, der im Falle des vorliegenden Ausführungsbeispiels mit der Fokussieroptik 8 zusammenfällt, einer gewünschten Bahn folgt.

Im Falle des vorliegenden Ausführungsbeispiels ist die Fokussieroptik 8 derart eingerichtet, das ihre Brennweite und somit ihre Fokuslänge *f* einstellbar ist. Dazu ist der Remote-Laserschweißkopf 7 in nicht dargestellter Weise mit dem Steuerrechner 10 verbunden, damit dieser die Brennweite des Remote-Laserschweißkopfs 7 automatisch einstellten kann. Somit weist der Industrieroboter 1 mit an seinem Flansch 5 befestigter Remote-Laserschweißvorrichtung 9 sieben Freiheitsgrade auf, von denen sechs durch die Achsen A1-A6 des Industrieroboters 1 und der siebte Freiheitsgrad durch die variable Fokuslänge *f* des Remote-Laserchweißkopfes 7 bestimmt werden.

Die Fig. 2 zeigt die geometrische Beziehung des Handwurzelpunktes 6, des Tool Center Points 8a und einen Prozessbahnpunkt 12 einer Prozessbahn, entlang derer die mittels der Remote-Laserschweißvorrichtung 9 zu erstellende Schweißnaht verlaufen soll. Damit der Fokus des Laserstrahls 11 im Prozessbahnpunkt 12 liegt, wird die Fokussieroptik 8 derart eingestellt, so dass die Fokuslänge *f* der Entfernung zwischen dem Tool Center Point 8a und dem Prozessbahnpunkt 12 liegt.

Die Fig. 2 zeigt ferner einen dem Flansch 5 zugeordneten Flanschpunkt 5a, dessen geometrische Beziehungen relativ zum Handwurzelpunkt 6 und zum Tool Center Point 8a im Falle des vorliegenden Ausführungsbeispiels bekannt und im Wesentlichen unabhängig von der Stellung der Roboterhand 4 konstant sind. Somit ist auch die Beziehung zwischen dem Tool Center Point 8a und dem Handwurzelpunkt 6 bekannt und im Wesentlichen von der Stellung der Roboterhand 4 unabhängig.

Im Falle des vorliegenden Ausführungsbeispiels sind der Tool Center Point 8a und der Handwurzelpunkt 6 im Abstand *D* von einander entfernt. Aufgrund der Geometrie der Roboterhand 4 und der daran befestigten Remote-Laserschweißvorrichtung 9 ergibt sich die Fokuslänge *f* zwischen dem Prozessbahnpunkt 12 und dem Tool Center Point 8a.

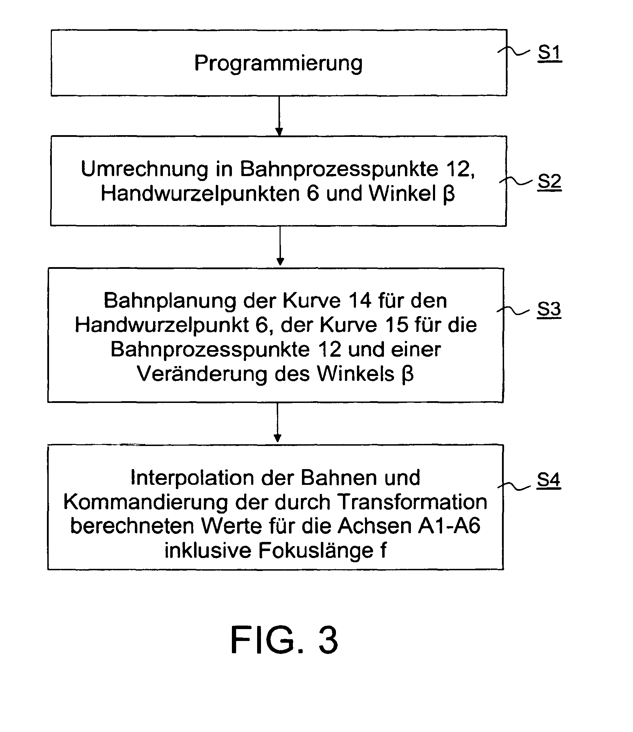

Wie bereits obenstehend ausgeführt, weist der Industrieroboter 1 mit an seinem Flansch 5 befestigter Remote-Laserschweißvorrichtung 9 sieben Freiheitsgrade auf und die Beziehungen zwischen dem Handwurzelpunkt 6, dem Tool Center Point 8a und dem Flanschpunkt 5a sind unabhängig von der Stellung der Roboterhand 4. Dadurch ist es möglich, die Laserschweißvorrichtung 9 bei einer vorgegebenen Position des Handwurzelpunktes 6, vorgegebenem Bahnprozesspunkt 12 und vorgegebener Fokuslänge *f* derart auszurichten, so dass sich der Tool Center Point 8a auf einem Kreis 13 mit Radius *r* befinden kann, dessen Mittelpunkt M sich auf der Verbindungslinie zwischen dem Handwurzelpunkt 6 und dem Prozessbahnpunkt 12 in einem Abstand *d* zum Handwurzelpunkt 6 befindet. Der Abstand *d* des Kreises 13 ergibt sich aus der Projektion des Abstands *D* zwischen dem Handwurzelpunkt 6 und dem Prozessbahnpunkt 12 auf die Verbindungslinie zwischen dem Handwurzelpunkt 6 und dem Prozessbahnpunkt 12. Der Radius *r* des Kreises 13 ergibt sich aus der Projektion des Abstands *D* zwischen dem Handwurzelpunkt 6 und dem Prozessbahnpunkt 12 auf eine Linie rechtwinklig zur Verbindungslinie zwischen dem Handwurzelpunkt 6 und dem Prozessbahnpunkt 12. Folglich kann der Winkel β, bezüglich dem der Tool Center Point 8a auf dem Kreis 13 ausgerichtet ist, entsprechend der Anwendung gewählt werden. Im Falle des vorliegenden Ausführungsbeispiels erfolgt die Programmierung und Bahnplanung, d.h. die Steuerung des Industrieroboters 1 derart, dass die Laserschweißvorrichtung 9 wie gewünscht die Schweißnaht erzeugt, wie folgt, wobei die Programmierung/ Bahnplanung mittels eines in der Fig. 3 gezeigten Flussdiagramms zusammengefasst ist.

Zunächst werden mehrere Posen des Tool Center Points 8a und dazugehörige Fokusabstände *f* programmiert, so dass die Laserschweißvorrichtung 9, wenn der Industrieroboter 1 die programmierten Punkte abführe, der Laserfokus der Remote-Laserschweißvorrichtung 9 Im Wesentlichen der Schweißbahn folgt, Schritt S1 des Flussdiagramms. Die programmierten Punkte werden im Steuerrechner 10 gespeichert und werden im Falle des vorliegenden Ausführungsbeispiels als kartesische Koordinaten, X, Y, Z (für die Position) und A, B, C (für die Orientierung) gespeichert.

Für die Bahnplanung, also für die aktuelle Berechnung der Achsenstellungen der Achsen A1-A6 während der durch den Steuerrechner 10 gesteuerten Bewegung des Industrieroboters 1 werden nicht die programmierten Punkte unmittelbar verwendet, sondern es werden aus den einzelnen, die jeweilige Pose des Tool Center Points 8a und der dazugehörigen Fokuslänge *f* beschreibenden Punkte mittels einer im Steuerrechner 10 abgelegten Transformation die entsprechende Position des entsprechenden Bahnprozesspunktes 12 und die Position des Handwurzelpunktes 6 berechnet. Die Positionen des relevanten Handwurzelpunktes 6 und des relevanten Bahnprozesspunktes 12 ergeben sich durch geeignete Transformationen, die sich aus der Geometrie der Roboterhand 4 ergeben und beispielsweise aus der Fig. 2 ableitbar sind. Zusätzlich wird noch eine Position des Tool Center Points 8a am Kreis 13 angegeben. Die Position des Tool Center Points 8a am Kreis 13 kann z.B. mittels einer Angabe über den Winkel β angegeben werden, wobei der Winkel β individuell programmiert wird. Dadurch ergibt sich jeweils ein Satz transformierter programmierter Punkte, aufweisend einen dem Handwurzelpunkt 6 zugeordneten und einen dem Bahnprozesspunkt 12 zugeordneten transformierten Punkt, sowie eine Angabe über den Winkel β, Schritt S2 des Flussdiagramms.

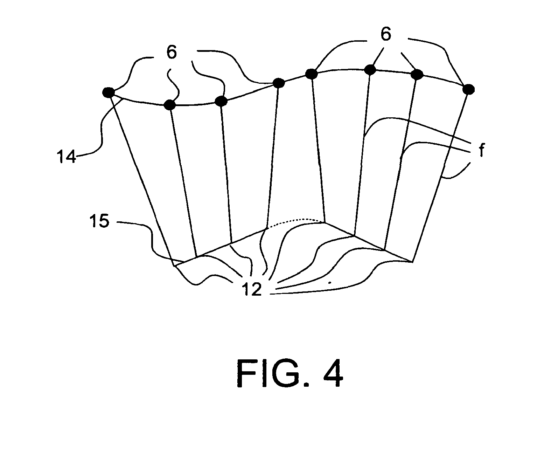

Für die Bahnplanung des Industrieroboters 1 werden anschlie-βend nicht die den einzelnen Posen zugeordneten programmierten Punkte verwendet, wie dies bei konventionellen Industrierobotern der Fall ist, sondern der Steuerrechner 10 interpoliert die einzelnen transformierten Punkte z.B. unter Verwendung von Lin- und Spline-Funktionen. Somit entsteht eine in der Fig. 4 gezeigte geplante Kurve 14 für den Handwurzelpunkt 6, eine geplante Kurve 15 für die Bahnprozesspunkte 12 und eine geplante Kurve für den Winkel β, Schritt S3 des Flussdiagramms.

Die einzelnen Kurven 14, 15 setzt der Steuerrechner 10 während des Ausführens der Bahnplanung im Rahmen der Bewegung des Industrieroboters 1 zu Kommandos zusammen, mittels derer die Achsen A1-A6 entsprechend der geplanten Kurven 14, 15 bewegt werden. Außerdem berechnet der Steuerrechner 10 den jeweiligen Fokusabstand *f* der Remote-Laserschweisvorrichtung 9, so dass der Schweißfokus im relevanten Bahnprozesspunkt 12 liegt, und steuert die Fokussierungsoptik 8 geeignet an, Schritt S4 des Flussdiagramms.

Im Falle des vorliegenden Ausführungsbeispiels wird der Verlauf der Bahnprozesspunkte 12, die den Laserauftreffpunkten entsprechen und die Kurve 15 ergeben, mittels geometrischer Kurven, insbesondere Splines unabhängig von den Handwurzelpunkten 6 festgelegt. Die durch die Handwurzelpunkte 6 festgelegte Kurve 14 wird ebenfalls insbesondere mittels Spline-Funktionen unabhängig von der den Bahnprozesspunkten 12 zugeordneten Kurve 15 berechnet. Die jeweilige Position auf dem Kreis 13 wird mittels glatter Interpolation der Winkel β festlegen. Die entsprechende Fokuslänge *f* ergibt sich aus diesen Berechnungen.

Ein Syntaxbeispiel kann wie folgt sein:

```
 spline with InterpolationMode = RemoteLaser, DefaultVelocity
 = Versatzgeschwindigkeit
    splPoly StartPunkt
    splPoly StartNahtl
    splLinear EndNahtl with ProzessGeschwindigkeit
 splPoly StartNaht2
    splCircular MidNaht2, EndNaht2 with ProzessGeschwindig-
 keit
 ...
    splPoly StartNahtN
    splLinear EndNahtN with ProzessGeschwindigkeit
    splPoly EndPunkt
 endspline
```

Für das eben beschriebene Ausführungsbeispiel wurden die mehreren Posen des Tool Center Points 8a und dazugehörige Fokusabstände *f* programmiert.

Alternativ ist es auch möglich, die Positionen der einzelnen Bahnprozesspunkte 12 zu programmieren, so dass sich diese auf der Kurve 15 bewegen. Zusätzlich werden die entsprechenden Fokuslängen *f* und die Orientierungen des Laserstrahls 11 programmiert.

Aus diesen Informationen berechnet der Steuerrechner 10 die Kurve 15 durch Interpolation der einzelnen Bahnprozesspunkte 15 und die Kurve 14 durch Ermitteln von transformierten programmierten Punkten, die die entsprechenden Positionen des Handwurzelpunktes 6 beschreiben unter Zuhilfenahme der Geometrie der Roboterhand 4 und der daran befestigten Remote-Laserschweißvorrichtung 9.

Zusätzlich wird noch die Position des Tool Center Points 8a am Kreis 13 angegeben.

## Patentansprüche

1. Bahnplanungsverfahren zum Steuern der Bewegung eines Industrieroboters (1), an dessen Roboterarm (2) ein Effektor, insbesondere eine Remote-Laserschweißvorrichtung (9) befestigt ist, der vorgesehen ist, Prozesspunkte in einem veränderbaren Abstand (f) zu einem ersten ausgezeichneten Punkt (8a) des Industrieroboters (1) zu bearbeiten, aufweisend folgende Verfahrensschritte:
- Erzeugen von ersten transformierten programmierten Punkten aus programmierten Punkten, die jeweils die Stellungen von Achsen (A1-A6) des Industrieroboters (1) beschreiben oder in Koordinaten ausgedrückt sind, die die Lagen des dem Industrieroboter (1) zugeordneten ersten ausgezeichneten Punktes (8a) beschreiben, wobei die ersten transformierten programmierten Punkte in Koordinaten ausgedrückt sind, die die entsprechenden Positionen eines dem Industrieroboter (1) zugeordneten zweiten ausgezeichneten Punktes (6) angeben,
- Erzeugen von zweiten transformierten programmierten Punkten (12) aus den programmierten Punkten und den zugehörigen Abständen (f), wobei die zweiten transformierten programmierten Punkte (12) in den jeweiligen Positionen beschreibenden Koordinaten ausgedrückt sind,
- aufgrund der ersten transformierten programmierten Punkte, Planen einer ersten Bahn (14), auf der sich der zweite ausgezeichnete Punkt (6) bewegen soll,
- Planen einer zweiten Bahn (15) aufgrund der zweiten transformierten Punkte (12) unabhängig vom Planen der ersten Bahn (14),
- Festlegen eines einen Freiheitsgrad des Industrieroboters (1) mit befestigtem Effektor (9) beschreibenden Parameters (β) für jeden programmierten Punkt, und
- unter Berücksichtigung des relevanten Parameters (β) Bewegen der Achsen (A1-A6) des Industrieroboters (1) derart, so dass sich der zweite ausgezeichnete Punkt (6) auf der ersten geplanten Bahn (14) bewegt und Einstellen des Effektors derart, dass sich die Prozesspunkte auf der zweiten geplanten Bahn (15) bewegen.

2. Bahnplanungsverfahren zum Steuern der Bewegung eines Industrieroboters (1), an dessen Roboterarm (2) ein Effektor, insbesondere eine Remote-Laserschweißvorrichtung (9) befestigt ist, der vorgesehen ist, Prozesspunkte (12) in einem veränderbaren Abstand (f) zu einem ersten ausgezeichneten Punkt (8a) des Industrieroboters (1) zu bearbeiten, aufweisend folgende Verfahrensschritte:
- Erzeugen von transformierten programmierten Punkten aus programmierten Punkten, die jeweils in Koordinaten ausgedrückt sind, die die Positionen der Prozesspunkte (12) beschreiben, und den zugehörigen Abständen (f) mit Ausrichtung zum ersten ausgezeichneten Punkt (8a), wobei die transformierten programmierten Punkte in Koordinaten ausgedrückt sind, die die entsprechenden Positionen eines dem Industrieroboter (1) zugeordneten zweiten ausgezeichneten Punktes (6) angeben,
- aufgrund der transformierten programmierten Punkte, Planen einer ersten Bahn (14), auf der sich der zweite ausgezeichnete Punkt (6) bewegen soll,
- unabhängig vom Planen der ersten Bahn (14) und aufgrund der programmierten Punkte, Planen einer zweiten Bahn (15) auf der sich die Prozesspunkte (12) bewegen sollen,
- Festlegen eines einen Freiheitsgrad des Industrieroboters (1) mit befestigtem Effektor (9) beschreibenden Parameters (β) für jeden programmierten Punkt, und
- unter Berücksichtigung des relevanten Parameters (β) Bewegen der Achsen (A1-A6) des Industrieroboters (1) derart, so dass sich der zweite ausgezeichnete Punkt (6) auf der ersten geplanten Bahn (14) bewegt und Einstellen des Effektors derart, dass sich die Prozesspunkte (12) auf der zweiten geplanten Bahn (15) bewegen.

3. Verfahren nach Anspruch 1 oder 2, bei dem der erste ausgezeichnete Punkt der Tool Center Point (8a) des Industrieroboters (1) ist.

4. Verfahren nach einem der Ansprüche 1 bis 3, bei dem der Roboterarm (2) eine Roboterhand (4) aufweist, der drei der Achsen (A4-A6) zugeordnet sind, die sich in einem Handwurzelpunkt (6) schneiden, und der zweite ausgezeichnet Punkt der Handwurzelpunkt (6) ist.

5. Verfahren nach einem der Ansprüche 1 bis 4, bei dem der Parameter einem Kreis (13) zugeordnet ist und die Position (β) des ersten ausgezeichneten Punkts (8a) auf dem Kreis (13) darstellt.

6. Verfahren nach einem der Ansprüche 1 bis 5, bei dem die Remote-Laserstrahlvorrichtung (9) einen Laserstrahl (11) zum Bearbeiten des Prozesspunktes aussendet und die Remote-Laserstrahlvorrichtung (9) derart eingerichtet ist, die Orientierung des Laserstrahls (11) zu ändern.

7. Industrieroboter, aufweisend
- einen Roboterarm (2) mit mehreren Achsen (A1-A6), dem ein erster ausgezeichneter Punkt (8a) zugeordnet ist,
- einen am Roboterarm (2) befestigten Effektor, insbesondere eine am Roboterarm (2) befestigte Remote-Laserschweißvorrichtung (9), der vorgesehen ist, Prozesspunkte in einem veränderbaren Abstand (f) zum ersten ausgezeichneten Punkt (8a) zu bearbeiten, und
- eine Steuerungsvorrichtung (10), die eingerichtet ist,
- die mehreren Achsen (A1-A6) zu bewegen,
- erste transformierte programmierte Punkte aus programmierten Punkten zu erzeugen, die jeweils die Stellungen der Achsen (A1-A6) beschreiben oder in Koordinaten ausgedrückt sind, die die Lagen des ersten ausgezeichneten Punktes (8a) beschreiben, wobei die ersten transformierten programmierten Punkte in Koordinaten ausgedrückt sind, die die entsprechenden Positionen eines dem Industrieroboter (1) zugeordneten zweiten ausgezeichneten Punktes (6) angeben,
- eine erste Bahn (14) aufgrund der ersten transformierten programmierten Punkten zu planen, auf der sich der zweite ausgezeichnete Punkt (6) bewegen soll,
- zweite transformierte programmierte Punkte (12) aus den programmierten Punkten und den zugehörigen Abständen (f) zu erzeugen, wobei die zweiten transformierten programmierten Punkte (12) in die jeweiligen Positionen beschreibenden Koordinaten ausgedrückt sind,
- eine zweite Bahn (15) aufgrund der zweiten transformierten Punkte (12) unabhängig vom Planen der ersten Bahn (14) zu planen, und
- unter Berücksichtigung eines einen Freiheitsgrad des Industrieroboters (1) mit befestigtem Effektor (9) beschreibenden Parameter (β) für jeden programmierten Punkt die Achsen (A1-A6) des Industrieroboters (1) derart zu bewegen, so dass sich der zweite ausgezeichnete Punkt (6) auf der ersten geplanten Bahn (14) bewegt und den Effektor derart einzustellen, dass sich die Prozesspunkte auf der zweiten geplanten Bahn (15) bewegen.

8. Industrieroboter, aufweisend
- einen Roboterarm (2) mit mehreren Achsen (A1-A6), dem ein erster ausgezeichneter Punkt (8a) zugeordnet ist,
- einen am Roboterarm (2) befestigten Effektor, insbesondere eine am Roboterarm (2) befestigte Remote-Laserschweißvorrichtung (9), der vorgesehen ist, Prozesspunkte (12) in einem veränderbaren Abstand (f) zum ersten ausgezeichneten Punkt (8a) zu bearbeiten, und
- eine Steuerungsvorrichtung (10), die eingerichtet ist,
- die mehreren Achsen (A1-A6) zu bewegen,
- transformierten programmierte Punkte aus programmierten Punkten zu erzeugen, die jeweils in Koordinaten ausgedrückt sind, die die Positionen der Prozesspunkte (12) beschreiben, und den zugehörigen Abständen (f) mit Ausrichtung zum ersten ausgezeichneten Punkt (8a), wobei die transformierten programmierten Punkte in Koordinaten ausgedrückt sind, die die entsprechenden Positionen eines dem Industrieroboter (1) zugeordneten zweiten ausgezeichneten Punktes (6) angeben,
- aufgrund der transformierten programmierten Punkte, eine erste Bahn (14) zu planen, auf der sich der zweite ausgezeichnete Punkt (6) bewegen soll,
- unabhängig vom Planen der ersten Bahn (14) und aufgrund der programmierten Punkte (12) eine zweite Bahn (15) zu planen, auf der sich die Prozesspunkte bewegen sollen,
- einen Freiheitsgrad des Industrieroboters (1) mit befestigtem Effektor (9) beschreibenden Parameters (β) für jeden programmierten Punkt festzulegen,
- unter Berücksichtigung des relevanten Parameters (β) die Achsen (A1-A6) des Industrieroboters (1) derart zu bewegen, so dass sich der zweite ausgezeichnete Funkt (6) auf der ersten geplanten Bahn (14) bewegt und Einstellen des Effektors derart, dass sich die Prozesspunkte auf der zweiten geplanten Bahn (15) bewegen.

9. Industrieroboter nach Anspruch 7 oder 8, dessen Roboterarm (2) eine Roboterhand (4) aufweist, der drei der Achsen (A4-A6) zugeordnet sind, die sich in einem Handwurzelpunkt (6) schneiden, und der zweite ausgezeichnet Punkt der Handwurzelpunkt (6) ist.

10. Industrieroboter nach einem der Ansprüche 7 bis 9, bei dem der erste ausgezeichnete Punkt der Tool Center Point (8a) des Industrieroboters (1) ist.

11. Industrieroboter nach einem der Ansprüche 7 bis 10, bei dem der Parameter einem Kreis (13) zugeordnet ist und die Position (β) des ersten ausgezeichneten Punkts (8a) auf dem Kreis (13) darstellt.

12. Industrieroboter nach einem der Ansprüche 7 bis 11, bei dem die Remote-Laserstrahlvorrichtung (9) einen Laserstrahl (11) zum Bearbeiten des Prozesspunktes aussendet und die Remote-Laserstrahlvorrichtung (9) derart eingerichtet ist, die Orientierung des Laserstrahls (11) zu ändern.

## Claims

1. Path planning method for controlling the movement of an industrial robot (1), onto the robot arm (2) of which an effector, in particular a remote laser welding device (9), is secured, which effector is provided to process process points at a variable distance (f) from a first designated point (8a) of the industrial robot (1), comprising the following method steps:
- producing first transformed programmed points from programmed points which each describe the positions of axes (A1-A6) of the industrial robot (1) or are expressed as coordinates which describe the positions of the first designated point (8a) assigned to the industrial robot (1), wherein the first transformed programmed points are expressed as coordinates, which specify the corresponding positions of a second designated point (6) assigned to the industrial robot (1),
- producing second transformed programmed points (12) from the programmed points and the corresponding intervals (f), wherein the second transformed programmed points (12) are expressed as coordinates which describe the respective positions,
- planning a first path (14), on the basis of the first transformed programmed points, on which the second designated point (6) is to move,
- planning a second path (15) on the basis of the second transformed points (12) independently of planning the first path (14),
- determining a parameter (β) for each programmed point that describes a degree of freedom of the industrial robot (1) with secured effector (9), and
- moving the axes (A1-A6) of the industrial robot (1) taking into account the relevant parameter (13), so that the second designated point (6) moves on the first planned path (14), and adjusting the effector so that the process points move on the second planned path (15).

2. Path planning method for controlling the movement of an industrial robot (1), onto the robot arm (2) of which an effector, in particular a remote laser welding device (9), is secured, which effector is provided to process process points (12) at a variable distance (f) from a first designated point (8a) of the industrial robot (1), comprising the following method steps:
- producing transformed programmed points from programmed points which are each expressed as coordinates which describe the position of the process points (12) and the corresponding intervals (f) with alignment to the first designated point (8a), wherein the transformed programmed points are expressed as coordinates which specify the corresponding positions of a second designated point (6) assigned to the industrial robot (1),
- planning a first path (14), on the basis of the transformed programmed points, on which path the second designated point (6) is to move,
- planning a second path (15), independently of planning the first path (14) and on the basis of the programmed points, on which the process points (12) are to move,
- defining a parameter (β) for each programmed point which describes a degree of freedom of the industrial robot (1) with secured effector (9), and
- moving the axes (A1-A6) of the industrial robot (1) taking into account the relevant parameter (β), so that the second designated point (6) moves on the first planned path (14), and adjusting the effector such that the process points (12) move on the second planned path (15).

3. Method according to claim 1 or 2, in which the first designated point is the tool centre point (8a) of the industrial robot (1).

4. Method according to one of claims 1 to 3, in which the robot arm (2) comprises a robot hand (4), to which three of the axes (A4-A6) are assigned, which intersect at a hand root point (6), and the second designated point is the hand root point (6).

5. Method according to one of claims 1 to 4, in which the parameter is assigned to a circle (13) and represents the position (β) of the first designated point (8a) on the circle (13).

6. Method according to one of claims 1 to 5, in which the remote laser beam device (9) emits a laser beam (11) for processing the process point, and the remote laser beam device (9) is set up to change the orientation of the laser beam (11).

7. Industrial robot, comprising
- a robot arm (2) with a plurality of axes (A1-A6), to which a first designated point (8a) is assigned,
- an effector secured onto the robot arm (2); in particular a remote laser welding device (9) secured onto the robot arm (2), which effector is provided to process process points at a variable distance (F) from the first designated point (8a), and
- a control device (10), which is set up
- to move the plurality of axes (A1-A6),
- to produce first transformed programmed points from programmed points which describe respectively the positions of the axes (A1-A6) or are expressed as coordinates, which describe the positions of the first designated point (8a), wherein the first transformed programmed points are expressed as coordinates which specify the corresponding positions of a second designated point (6) assigned to the industrial robot (1),
- to plan a first path (14) on the basis of the first transformed programmed points, on which the second designated point (6) is to move,
- to produce second transformed programmed points (12) from the programmed points and the corresponding intervals (f), wherein the second transformed programmed points (12) are expressed as coordinates which describe the respective positions,
- to plan a second path (15) on the basis of the second transformed points (12), independently of planning the first path (14), and
- to move the axes (A1-A6) of the industrial robot (1) taking into account a parameter (β) which describes a degree of freedom of the industrial robot (1) with secured effector (9) for each programmed point, so that the second designated point (6) moves on the first planned path (14), and to adjust the effector such that the process points move on the second planned path (15).

8. Industrial robot, comprising
- a robot arm (2) with a plurality of axes (A1-A6), to which a first designated point (8a) is assigned,
- an effector secured onto the robot arm (2), in particular a remote laser welding device (9) secured onto the robot arm (2), which effector is provided to process process points (12) at a variable distance (f) from the first designated point (8a), and
- a control device (10), which is set up
- to move the plurality of axes (A1-A6),
- to produce transformed programmed points from programmed points, which are each expressed as coordinates which describe the positions of the process points (12) and the corresponding intervals (f) in alignment with the first designated point (8a), wherein the transformed programmed points are expressed as coordinates which specify the corresponding positions of a second designated point (6) assigned to the industrial robot (1),
- to plan a first path (14) on the basis of the transformed programmed points, on which path the second designated point (6) is to move,
- to plan a second path (15), independently of planning the first path (14) and on the basis of the programmed points (12), on which path the process points are to move,
- to define a parameter (β) for each programmed point that describes a degree of freedom of the industrial robot (1) with secured effector (9),
- to move the axes (A1-A6) of the industrial robot (1) taking into consideration the relevant parameter (β), so that the second designated point (6) moves on the first planned path (14) and to adjust the effector such that the process points move on the second planned path (15).

9. Industrial robot according to claim 7 or 8, the robot arm (2) of which comprises a robot hand (4), to which three of the axes (A4-A6) are assigned which intersect at a hand root point (6), and the second designated point is the hand root point (6).

10. Industrial robot according to one of claims 7 to 9, in which the first designated point is the tool centre point (8a) of the industrial robot (1).

11. Industrial robot according to one of claims 7 to 10, in which the parameter is assigned to a circle (13) and represents the position (β) of the first designated point (8a) on the circle (13).

12. Industrial robot according to one of claims 7 to 11, in which the remote laser beam device (9) emits a laser beam (11) for processing the process point, and the remote laser beam device (9) is set up to change the orientation of the laser beam (11).

## Revendications

1. Procédé de planification de trajectoire pour commander le déplacement d'un robot industriel (1) sur le bras de robot (2) duquel est fixé un effecteur, en particulier un dispositif de soudage au laser à distance (9) qui est prévu pour traiter des points de processus à une distance (f) variable d'un premier point remarquable (8a) du robot industriel (1), présentant les étapes de procédé suivantes :
- générer des premiers points programmés transformés à partir de points programmés qui décrivent chacun les positions d'axes (A1-A6) du robot industriel (1) ou qui sont exprimés en coordonnées qui décrivent les positions du premier point remarquable (8a) associé au robot industriel (1), les premiers points programmés transformés étant exprimés en coordonnées qui indiquent les positions correspondantes d'un deuxième point remarquable (6) associé au robot industriel (1),
- générer des deuxièmes points (12) programmés transformés à partir des points programmés et des distances (f) associées, les deuxièmes points (12) programmés transformés étant exprimés en coordonnées décrivant les positions respectives,
- sur la base des premiers points programmés transformés, planifier une première trajectoire (14) sur laquelle le deuxième point remarquable (6) doit se déplacer,
- planifier une deuxième trajectoire (15) sur la base des deuxièmes points (12) transformés, indépendamment de la planification de la première trajectoire (14),
- déterminer un paramètre (β) décrivant un degré de liberté du robot industriel (1) avec effecteur (9) fixé pour chaque point programmé, et
- compte tenu du paramètre (β) pertinent, déplacer les axes (A1-A6) du robot industriel (1) de telle sorte que le deuxième point remarquable (6) se déplace sur la première trajectoire (14) planifiée, et régler l'effecteur de telle sorte que les points de processus se déplacent sur la deuxième trajectoire (15) planifiée.

2. Procédé de planification de trajectoire pour commander le déplacement d'un robot industriel (1) sur le bras de robot (2) duquel est fixé un effecteur, en particulier un dispositif de soudage au laser à distance (9) qui est prévu pour traiter des points de processus à une distance (f) variable d'un premier point remarquable (8a) du robot industriel (1), présentant les étapes de procédé suivantes :
- générer des points programmés transformés à partir de points programmés qui sont exprimés en coordonnées qui décrivent les positions des points de processus (12), et des distances (f) associées avec alignement par rapport au premier point remarquable (8a), les premiers points programmés transformés étant exprimés en coordonnées qui indiquent les positions correspondantes d'un deuxième point remarquable associé au robot industriel (1),
- générer des deuxièmes points (12) programmés transformés à partir des points programmés et des distances (f) associées, les deuxièmes points (12) programmés transformés étant exprimés en coordonnées décrivant les positions respectives,
- sur la base des points programmés transformés, planifier une première trajectoire (14) sur laquelle le deuxième point remarquable (6) doit se déplacer,
- planifier une deuxième trajectoire (15) sur la base des deuxièmes points (12) transformés, indépendamment de la planification de la première trajectoire (14),
- déterminer un paramètre (β) décrivant un degré de liberté du robot industriel (1) avec effecteur (9) fixé pour chaque point programmé, et
- compte tenu du paramètre (β) pertinent, déplacer les axes (A1-A6) du robot industriel (1) de telle sorte que le deuxième point remarquable (6) se déplace sur la première trajectoire (14) planifiée, et régler l'effecteur de telle sorte que les points de processus (12) se déplacent sur la deuxième trajectoire (15) planifiée.

3. Procédé selon les revendications 1 ou 2, dans lequel le premier point remarquable est le Tool Center Point (8a) du robot industriel (1).

4. Procédé selon l'une des revendications 1 à 3, dans lequel le bras de robot (2) présente une main de robot (4) à laquelle sont associés trois axes (A4-A6) qui se coupent dans un point de carpe (6), et le deuxième point remarquable est le point de carpe (6).

5. Procédé selon l'une des revendications 1 à 4, dans lequel le paramètre est associé à un cercle (13) et représente la position (β) du premier point remarquable (8a) sur le cercle (13).

6. Procédé selon l'une des revendications 1 à 5, dans lequel le dispositif à rayon laser à distance (9) émet un rayon laser (11) pour traiter le point de processus, et le dispositif à rayon laser à distance (9) est aménagé de manière à modifier l'orientation du rayon laser (11).

7. Robot industriel, présentant
- un bras de robot (2) avec plusieurs axes (A1-A6) auquel est associé un premier point remarquable (8a),
- un effecteur fixé sur le bras de robot (2), en particulier un dispositif de soudage au laser à distance (9) fixé sur le bras de rotor, qui est prévu pour traiter des points de processus à une distance (f) variable par rapport au premier point remarquable (8a), et
- un dispositif de commande (10) qui est aménagé de manière à
- déplacer plusieurs axes (A1-A6),
- générer des premiers points programmés transformés à partir de points programmés qui décrivent chacun les positions des axes (A1-A6) ou qui sont exprimés en coordonnées qui décrivent les positions du premier point remarquable (8a), les premiers points programmés transformés étant exprimés en coordonnées qui indiquent les positions correspondantes d'un deuxième point remarquable (6) associé au robot industriel (1),
- sur la base des premiers points programmés transformés, planifier une première trajectoire (14) sur laquelle le deuxième point remarquable (6) doit se déplacer,
- générer des deuxièmes points (12) programmés transformés à partir des points programmés et des distances (f) associées, les deuxièmes points (12) programmés transformés étant exprimés en coordonnées décrivant les positions respectives,
- planifier une deuxième trajectoire (15) sur la base des deuxièmes points (12) transformés, indépendamment de la planification de la première trajectoire (14), et
- compte tenu d'un paramètre (β) décrivant un degré de liberté du robot industriel (1) avec effecteur (9) fixé, déplacer pour chaque point programmé les axes (A1-A6) du robot industriel (1) de telle sorte que le deuxième point remarquable (6) se déplace sur la première trajectoire (14) planifiée et régler l'effecteur de telle sorte que les points de processus se déplacent sur la deuxième trajectoire (15) planifiée.

8. Robot industriel, présentant
- un bras de robot (2) avec plusieurs axes (A1-A6) auquel est associé un premier point remarquable (8a),
- un effecteur fixé sur le bras de robot (2), en particulier un dispositif de soudage au laser à distance (9) fixé sur le bras de rotor, qui est prévu pour traiter des points de processus (12) à une distance (f) variable par rapport au premier point remarquable (8a), et
- un dispositif de commande (10) qui est aménagé de manière à
- déplacer plusieurs axes (A1-A6),
- générer des points programmés transformés à partir de points programmés qui sont chacun exprimés en coordonnées qui décrivent les positions des points de processus (12), et des distances (f) associées avec alignement par rapport au premier point remarquable (8a), les points programmés transformés étant exprimés en coordonnées qui indiquent les positions correspondantes d'un deuxième point remarquable associé au robot industriel (1),
- sur la base des points programmés transformés, planifier une première trajectoire (14) sur laquelle le deuxième point remarquable (6) doit se déplacer,
- indépendamment de la planification de la première trajectoire (14) et sur la base des deuxièmes points (12) transformés, planifier une deuxième trajectoire (15) sur laquelle les points de processus doivent se déplacer,
- déterminer un paramètre (β) décrivant un degré de liberté du robot industriel (1) avec effecteur (9) fixé pour chaque point programmé,
- compte tenu du paramètre (β) pertinent, déplacer les axes (A1-A6) du robot industriel (1) de telle sorte que le deuxième point remarquable (6) se déplace sur la première trajectoire planifiée et régler l'effecteur de telle sorte que les points de processus se déplacent sur la deuxième trajectoire (15) planifiée.

9. Robot industriel selon les revendications 7 ou 8 dont le bras de robot (2) présente une main de robot (4) à laquelle sont associés trois axes (A4-A6) qui se coupent dans un point de carpe (6), le deuxième point remarquable étant le point de carpe (6).

10. Robot industriel selon l'une des revendications 7 à 9, dans lequel le premier point remarquable est le Tool Center Point (8a) du robot industriel (1).

11. Robot industriel selon l'une des revendications 7 à 10, dans lequel le paramètre est associé à un cercle (13) et représente la position (β) du premier point remarquable (8a) sur le cercle (13).

12. Robot industriel selon l'une des revendications 7 à 11 dans lequel le dispositif à rayon laser à distance (9) émet un rayon laser (11) pour traiter le point de processus, et le dispositif à rayon laser à distance (9) est aménagé de manière à modifier l'orientation du rayon laser (11).
